Europäisches Patentamt

European Patent Office

Office européen des brevets

(11) Veröffentlichungsnummer: **0 054 822**
A1

# (12) EUROPÄISCHE PATENTANMELDUNG

(21) Anmeldenummer: 81110213.6

(22) Anmeldetag: 07.12.81

(51) Int. Cl.³: **C 04 B 35/56**

(30) Priorität: 12.12.80 DE 3046801

(43) Veröffentlichungstag der Anmeldung: 30.06.82
Patentblatt 82/26

(84) Benannte Vertragsstaaten: BE CH FR GB IT LI NL

(71) Anmelder: Kernforschungsanlage Jülich Gesellschaft
mit beschränkter Haftung, Postfach 1913, D-5170 Jülich
(DE)

(72) Erfinder: Gupta, Ashok Kumar, Artilleriestrasse 49,
D-5170 Jülich (DE)
Erfinder: Gyarmati, Ernö, Dr., Lorsbeckerstrasse 54,
D-5170 Jülich (DE)
Erfinder: Kreutz, Hermann, Försterweg 3b,
D-4050 Mönchengladbach (DE)
Erfinder: Münzer, Rudolf, Tilsiter Strasse 7,
D-5170 Alsdorf (DE)
Erfinder: Naoumidis, Aristidis, Dr., Kreisbahnstrasse 30,
D-5170 Jülich (DE)
Erfinder: Nickel, Hubertus, Prof., Am Waldeck 5,
D-5170 Jülich (DE)

(54) Verfahren zur Herstellung von Siliciumcarbidkörpern mit Hohlräumen.

(57) Zur Herstellung von Siliciumcarbidhohlkörpern bzw.
Siliciumcarbidkörpern mit Hohlräumen, ausgehend von einem Kohlenstoff enthaltenden Vorkörper, der mit geschmolzenem Silicium siliciert wird, werden vor der Silicierung Kerne aus nichtsilicierbarem Graphit in den Hohlräumen des zu silicierenden Körpers vorgesehen, die nach der Silicierung entfernt werden.

EP 0 054 822 A1

0054822

Kernforschungsanlage Jülich
Gesellschaft mit beschränkter Haftung

Verfahren zur Herstellung von Siliciumcarbidkörpern
mit Hohlräumen

Die Erfindung bezieht sich auf ein Verfahren zur Herstellung von Siliciumcarbidkörpern mit Hohlräumen, bei dem ein Kohlenstoff aufweisender Grünkörper mit geschmolzenem Silicium siliciert wird. Als "Grünkörper" wird dabei der noch nicht silicierte kohlenstoffhaltige Körper bezeichnet, wie er durch Formgebung aus einer verkokbares Bindemittel enthaltenden Pulvermasse und anschließendes Verkoken des Binders erhältlich ist.

Gegenstände aus Siliciumcarbid lassen sich nach der US-PS 3 836 673 durch Heißpressen aus feinem Siliciumcarbidpulver bei einer Temperatur von $2075^{\circ}C$ und einem Druck von 18,9 MPa unter Verwendung von Graphitmatrizen herstellen. Nach dieser Methode wird eine Materialdichte erreicht, die über 99% des theoretischen Wertes liegt. Auf diese Weise lassen sich Körper verschiedener Dimensionen und Formen produzieren. Die Form der Gegenstände, ob es sich um Kompaktkörper wie Stäbe, Stifte, Zylinder etc. oder um Hohlkörper wie Ringe, Röhren, Tiegel, Schmelzschiffchen etc. handelt, kann man durch die entsprechende Ausbildung der Matrizen bzw. Stempel bestimmen. Dieses Verfahren ist sehr aufwendig.

- 2 -

Nach einem anderen Verfahren werden aus submikrofeinem SiC-Pulver vor allem Hohlkörper schlicker-gegossen. Hierbei besteht der Schlicker nach Angaben Giddings, R.A. et al., General Electric, Techn. Inf. Ser.75 CRD o6o, aus 65 - 75% SiC, wodurch die Gründichte des Körpers 6o - 62% der theoretischen Dichte beträgt. Nach der Sinterung werden Dichtewerte von 2,95 - 3,o5 g/cm$^3$ erreicht. Bekannt sind nach der Schlickerguß-Methode erzeugte Röhren, Tuben, Tiegel etc. Gegenstände mit Versetzungen sowie Röhren, Stäbe und dergleichen können aus Gemischen von SiC-Pulver und Wachs bei Raumtemperatur und Drücken von 3,5 - 7 MPa entweder durch Spritzguß (diskontinuierlich) oder durch Extrusion (kontinuierlich) hergestellt werden. Die Grünlinge werden bei ca. 2oo$^o$C entwachst und bei den üblichen Temperaturen gesintert. Nach der Sinterung wiesen die nach diesen Methoden hergestellten Körper Dichtewerte zwischen 9o und 95%, bezogen auf die Theorie, auf.

Eine zweite große Gruppe der Herstellungsmethoden für Siliciumcarbidformkörper wird in der Fachliteratur als "Reaktionsbindung" oder "Reaktionssintern" oder "Selbstbindung" bezeichnet. Diese Verfahren umfassen im wesentlichen zwei Stufen: (a) die Herstellung des Grünkörpers und (b) die Durchführung der Reaktion. Für die Herstellung des Grünkörpers wird als Aus-

- 3 -

gangsmaterial ein aus Kohlenstoff-(Siliciumcarbid)-Pulver und Binder bestehendes Gemisch verwendet. Dieses Gemisch wird je nach Form, Größe und Funktion des zu erzeugenden Gegenstandes im kalten Zustand isostatisch oder gesenkpreßt, extrudiert oder schlickergegossen etc. und der Binder verkokt. In der US-PS 4 019 913 werden als Beispiele für nach diesen Methoden hergestellte Grünkörper Tiegel, Scheiben, Zylinder und Platten angegeben.

Nach P. Daniel (Indust. Diamond Rew. 1976, 41-44) werden durch isostatische Preßverfahren Raketendüsen, Ringe, Zylinder, Leisten etc. hergestellt. Von Forrest, C.W. et al., in TRG Rep.2o53 (5) 1970 wird die Herstellung von Röhren, Stäben, Tiegeln etc. durch Extrusionsverfahren beschrieben. In der Fachliteratur sind noch eine große Anzahl von Gegenständen erwähnt, die als Grünkörper nach einer hier erwähnten Methode hergestellt werden. Die nach einer Verkokungs-Zwischenstufe erhaltenen Grünkörper werden in der zweiten Stufe siliciert. Hierfür werden die Gegenstände entweder in einem Vakuumofen zwischen 1800 und 2100$^{O}$C Siliciumdämpfen ausgesetzt oder mittels einer entsprechenden Vorrichtung in flüssiges Silicium (1450-1800$^{O}$C) getaucht. Das Silicium dringt hierbei durch die Poren in den Grünkörper und reagiert mit dem Kohlenstoffanteil zu Siliciumcarbid. In der Regel bleiben dabei nach Ablauf der Umsetzung je nach Erfahrung und Fertigkeit des Herstellers zwischen 5 - 15% freies Silicium in den Poren zurück.

Bei allen diesen Verfahren, also sowohl bei den Sinterverfahren (mit reinem SiC) als auch beim Reaktionssintern, werden die Hohlräume nach zwei Arten ausgebildet. Entweder wird die in der Matrize befindliche binderhaltige Pulvermasse mittels eines Stempels zu einem Hohlkörper geformt (Preß- und Gußverfahren) oder durch ein Mundstück mit Dorn geschickt (Extrusion). Der geformte Hohlkörper wird zunächst, um den Plastizität gewährenden Binder zu entfernen, der Verkokung unterworfen. Hierbei wird ein Teil des Binders in Kohlenstoff umgewandelt und ein anderer verflüchtigt sich, wodurch eine wesentliche Schrumpfung des gefestigten Körpers stattfindet.

Bei der Silicierung des Formkörpers im Tauchbad fließt das Silicium auch in die Hohlräume, wodurch die Umsetzungsreaktion gleichzeitig auch vor der Innenseite des Körpers abläuft. Sofern der Hohlraumdurchmesser groß genug ist und das Werkstück keine Sperre gegen das Ausfließen hat, fließt das Silicium beim Entfernen des Gegenstandes aus der Schmelze aus den Hohlräumen heraus. Bei Ausflußsperren sowie bei kleineren Bohrungen (von z.B. 2 mm ⌀) bleibt das Silicium jedoch wegen seiner hohen Oberflächenspannung im Hohlraum zurück. Hierdurch ergeben sich in zweierlei Hinsicht Schwierigkeiten. Erstens kann das in den Bohrungen bzw. kleinen Hohlräumen erstarrte Silicium wegen seines negativen thermischen Ausdehnungskoeffizienten vor allem bei dünnwandigen Gegenständen das Werkstück sprengen. Zweitens muß man viel Zeit und Mühe aufwenden, um das Siliciummetall chemisch oder mechanisch zu entfernen. Hinzu kommt noch, daß sowohl bei chemischer als auch bei mechanischer Entfernung des Siliciums bestimmte technologische aber auch wirtschaftliche Probleme auftreten können. So läßt sich bei der chemischen Bearbeitung nicht vermeiden, daß die Ätzlösung das Silicium auch an den oberflächennahen Bereichen des Werkstückes herauslöst. Hierdurch entsteht eine gewisse Rauhigkeit, die evtl. eine zusätzliche Bearbeitung der Oberfläche notwendig macht. Die mechanische Entfernung des Siliciums erfordert vor allem bei Krümmern, bei innen versetzten Flächen etc. mitunter einen hohen technologischen Aufwand und wegen seiner hohen Härte teure Bohr- und Schleifwerkzeuge.

Es ist daher Aufgabe der Erfindung, ein Verfahren zur Herstellung von Siliciumcarbidkörpern mit Hohlräumen zu schaffen, nach dem auch relativ dünnwandige Gegenstände ohne weiteres hergestellt werden können und ein mühevolles Nacharbeiten weitgehend vermieden werden kann.

Das zu diesem Zweck entwickelte erfindungsgemäße Verfahren ist dadurch gekennzeichnet, daß man in den Hohlräumen des zu silicierenden Körpers Kerne aus nichtsilicierbarem Graphit vorsieht, die nach der Silicierung entfernt werden.

Nach diesem Verfahren können nicht nur Formkörper mit (geraden) Bohrungen hergestellt werden sondern auch Körper mit kompliziert gestaltetem Hohlraum, indem man beispielsweise entweder einen entsprechend geformten Kern direkt bei der Formungstechnik in den Körper einbringt oder einen Grünkörper samt Kern aus einzelnen Teilen zusammensetzt, die sich beim Silicieren miteinander verbinden. Besonders einfach erhält man jedoch Formkörper mit geradlinigen Hohlräumen, indem man in entsprechende Ausnehmungen oder Bohrungen des Grünkörpers Graphitkerne bzw. Stifte einsetzt.

Diese Graphitkerne, die nicht silicierbar sein sollen, haben insbesondere eine Dichte von $\geq 1,4$ g/cm$^3$ und vorzugsweise über 1,8 g/cm$^3$, eingedenk der Tatsache, daß Graphit mit genügend hoher Dichte nicht mehr von Silicium angegriffen wird.

Die Herstellung des Grünkörpers aus kohlenstoffhaltigem Material erfolgt in bekannter Weise durch Gesenkwarmpressen, isostatisches Warmpressen, Strangpressen, Schlickerguß usw., wobei im Falle von Kohlenstoffkörpern für eine Dichte zwischen o,8 bis 1,2 g/cm$^3$ nach dem Verkoken gesorgt wird.

Der im Hohlraum vorzusehende Kern aus nichtsilicierbarem Graphit, der vorzugsweise nachträglich eingefügt wird, sollte gut eingepaßt werden, so daß nicht wesentlich mehr Spiel als etwa einige zehntel Millimeter verbleibt, wodurch verhindert wird, daß bei der Schmelzsilicierung dickere Siliciumschichten an der Grenze Hohlkörper/Kern verbleiben, die sich mechanisch nachteilig auswirken können, da sich Silicium beim Abkühlen ausdehnt.

Die Schmelzsilicierung erfolgt in an sich bekannter Weise etwa durch Aufbringen von Silicium oberhalb der Schmelztemperatur und am einfachsten durch Tauchen der mit Kern versehenen Hohlkörper in eine Siliciumschmelze, bis zur gewünschten Umsetzung oder durch kürzeres Tauchen und anschließendes Durchreagierenlassen bei hoher Temperatur.

Beim erfindungsgemäßen Verfahren erfolgt die Umsetzung des Kohlenstoffanteils des Hohlkörpers nur von außen nach innen und kommt an dem nicht silicierbaren Graphitkern zum Stillstand. Nach Beendigung der Silicierung befreit man die Oberfläche des Graphitkerns an einer Stelle von der an seiner Oberfläche gebildeten einige Mikrometer dicken Siliciumcarbidschicht und versieht den Kern mit einer Bohrung (bzw. Bohrungen), so daß ein Anteil des Graphits auf diese Weise entfernt werden kann. Gegebenenfalls läßt sich der Graphit auf diese Weise entfernen, was sich bei größeren Graphitkernen als besonders vorteilhaft erwiesen hat. Den Restgraphit kann man anschließend durch Verbrennung im Luft- oder Sauerstoffstrom beseitigen. Bei diesem Verbrennungsprozeß wird nicht nur der Kohlenstoff, sondern auch das zwischen Graphitkern und Innenwand des Hohlkörpers eingesickerte Silicium verbrannt. Das gebildete Siliciumdioxid ist krümelig und kann anschließend z.B. durch einen Luftstrahl herausgeblasen oder in einem Ultraschallbad entfernt werden.

Die Verbrennung des Graphitkerns in sauerstoffhaltigem Gas erfolgt insbesondere zwischen 7oo und 1ooo$^\circ$C insbesondere um etwa 8oo$^\circ$C.

Komplizierte Graphitkerne können ohne weiteres nach entsprechender geringer oberflächlicher Anbohrung vollständig ausgebrannt werden. Bei größeren geraden Kernen kann auch die dünne Siliciumzwischenschicht beispielsweise mittels Natronlauge beseitigt und der Kern herausgeschlagen werden.

Es folgen Beispiele zur Erläuterung der Erfindung, bei deren Beschreibung auf die angefügten Zeichnungen Bezug genommen wird; es zeigen:

Figur 1    einen Formkörper mit einer Vielzahl von engen Bohrungen;

Figur 2    eine Siliciumcarbidschraube mit engen Bohrungen im Schraubenkopf;

Figur 3    ein enges Schutzrohr für Sonden und Fühler; und

Figur 4    einen relativ dünnwandigen Behälter mit großem Hohlraum

### Beispiel 1

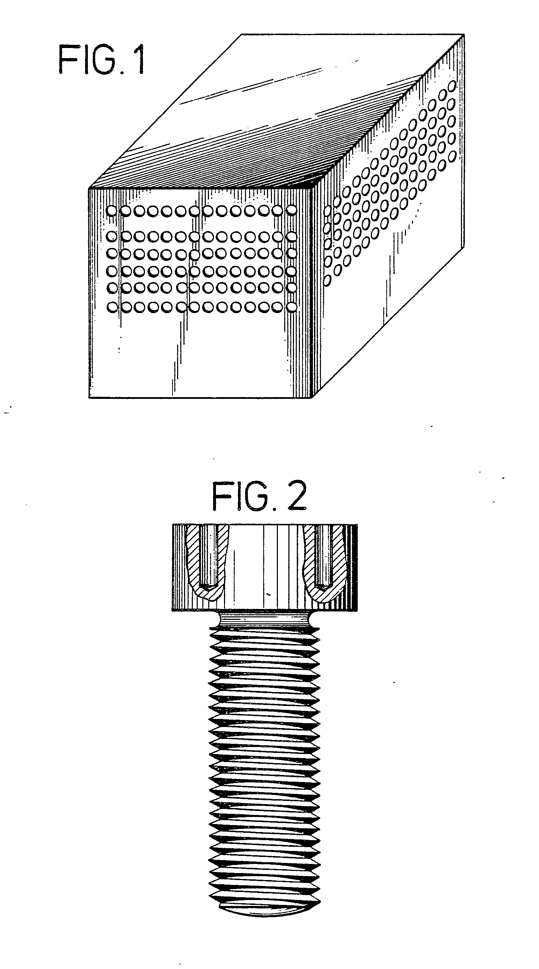

In die Bohrungen eines Wärmetauscher-Körpers, wie er in Figur 1 angedeutet ist, wurden vor der Silicierung 1 mm dicke Graphitstifte ($\varrho \sim 1,75$ $g/cm^3$) hineingesteckt. Nach der Umwandlung des Grünkörpers in SiC (durch 5 Minuten langes Tauchen in eine Si-Schmelze von $1750^{o}C$ und anschließendes etwa halbstündiges Aufheizen auf $2000^{o}C$) wurden die vier Stirnseiten der Platten angeschliffen und falls die Graphitstifte mit einem entsprechenden Dorn nicht ausstechbar waren, mit einem Metallbohrer ausgebohrt. Nach einer Glühbehandlung bei $800^{o}C$ im Luftstrom waren alle Löcher frei und die Wandungen zeigten eine einwandfreie glatte Oberfläche.

### Beispiel 2

Fig. 2 zeigt eine Siliciumcarbidschraube mit Bohrungen von 2mm Durchmesser im Schraubenkopf. Ein Eindringen des Siliciums während der Reaktion wurde durch Graphitstifte verhindert. Die Entfernung erfolgte ähnliche wie im Beispiel 1, wobei jedoch auf ein Glühen im Luftstrom verzichtet werden konnte.

### Beispiel 3

Die Bohrung des in Fig.3 gezeigten Thermoelement-Schutzrohres wurde vor einem Vollaufen mit Siliciumschmelze, wie beschrieben, durch einen Graphitkern geschützt.

### Beispiel 4

Der in Fig. 4 gezeigte Hohlkörper wurde ebenfalls vor der Silicierung mit Graphitkern und -stiften versehen. Nach Beendigung der Reaktion wurden die Stifte

- 1o -

und der Kern durchbohrt. Nach einer Glühung bei 8oo°C im Luftstrom wies der Hohlkörper an allen inneren Wänden eine einwandfreie Oberfläche auf.

Kernforschungsanlage Jülich
Gesellschaft mit beschränkter Haftung

Patentansprüche

1. Verfahren zur Herstellung von Silciumcarbidkörpern mit Hohlräumen, bei dem ein Kohlenstoff
aufweisender Grünkörper mit geschmolzenem Silicium
siliciert wird, d a d u r c h   g e k e n n -
z e i c h n e t , daß man in den Hohlräumen des
zu silicierenden Körpers Kerne aus nichtsilicierbarem Graphit vorsieht, die nach der Silicierung entfernt werden.

2. Verfahren nach Anspruch 1, dadurch gekennzeichnet,
daß die Hohlräume durch Bohrungen im Grünkörper
gebildet werden, in welche Graphitkerne eingesetzt werden.

3. Verfahren nach Anspruch 1 oder 2, dadurch gekennzeichnet, daß Graphitkerne mit einer Dichte von
zumindest 1,4 g/cm$^3$ und vorzugsweise über 1,8 g/cm
verwendet werden.

4. Verfahren nach einem der vorangehenden Ansprüche,
dadurch gekennzeichnet, daß man die Graphitkerne
nach der Silicierung des Grünkörpers mechanisch
durch- oder anbohrt und den Körper einer Glühbehandlung in sauerstoffhaltigem Gas unterwirft.

1.581
/bre.

1/2

0054822

FIG.1

FIG. 2

**Europäisches Patentamt**

**EUROPÄISCHER RECHERCHENBERICHT**

0054822

Nummer der Anmeldung

EP 81 11 0213.6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 886 246 (P. KENNEDY et al.) <br> * Ansprüche 1 bis 4 * | 1-4 |

**KLASSIFIKATION DER ANMELDUNG (Int. Cl.³)**

C 04 B 35/56

**RECHERCHIERTE SACHGEBIETE (Int. Cl.³)**

C 04 B 35/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 21-01-1982 | KESTEN |

EPA form 1503.1  06.78